# EUROPEAN PATENT SPECIFICATION

(11) **EP 0 880 684 B1**
(45) Date of publication and mention of the grant of the patent: **25.06.2003**
(21) Application number: 96933719.5
(22) Date of filing: 04.10.1996
(51) Int. Cl.: G01L 5/10, B65H 63/028, D01H 13/20

(54) **THREAD SIGNAL EMITTER**
FADENSPANNUNGSSIGNALGEBER
EMETTEUR DE SIGNAL DE TENSION DE FIL

(30) Priority: 06.10.1995 SE 9503461
(43) Date of publication of application: 02.12.1998
(73) Proprietor: Eltex of Sweden AB, 343 24 Älmhult (SE)
(72) Inventor: CALMERKLINT, Roland, S-343 34 Älmhult (SE); NILSSON, Lars, S-343 32 Älmhult (SE)
(74) Representative: Nilsson, Lennart
(86) International application number: SE9601264
(87) International publication number: WO97013131

(56) References cited:
- SE-C- 502 045
- US-A- 3 526 130
- US-A- 5 136 202

## Description

The present invention relates to an apparatus according to the preamble of Claim 1.

SE-C-502 045 describes an apparatus for generating an electric signal corresponding to the tension and / or movement of a thread. The thread actuates a flexible element with an active element whose tension change is converted into a corresponding electric signal. The active element is coupled to a charging amplifier which is disposed to be zeroised before each measurement cycle.

US-A-5 136 202 describes an apparatus for generating an electric signal corresponding to the tension and / or movement of a thread. The thread actuates a flexible element with an active element whose tension change is converted into a corresponding electric signal. The active element is mounted to the flexible element and to a bracket by help of screws.

In many contexts where it is desirable to monitor a thread, and in particular to dynamically monitor the thread, extremely high demands are placed on the emitter proper and in particular its design and construction. In particular in those cases where it is desirable to monitor and study in depth details or merely different parts of the tension cycle in the thread during the execution of a stitch in a sewing machine, the demands on rapidity and sensitivity are high in the extreme.

The task forming the basis of the present invention is to satisfy the above-outlined desiderata.

This task is solved according to the present invention in that the apparatus disclosed by way of introduction has been given the characterizing features as set forth in the appended Claims.

The present invention affords the possibility of designing and making the elements with slight mass, whereby they become more rapid and consequently more sensitive. The inherent resonance oscillation of the elements should, moreover, be relatively high in order to counteract the effects of machine vibrations. An apparatus according to the present invention is extremely versatile and permits many combinations of thread tension measurements and time measurements in known thread tension cycles. For example, it is possible to monitor the instantaneous value of the thread tension throughout an entire machine cycle. It is further possible to monitor the peak value of the thread tension throughout an entire machine cycle and to monitor the lowest thread tension during a predetermined part of a machine cycle. The apparatus according to the invention further permits monitoring of the mean value of the thread tension during one or more machine cycles. It is also possible to transmit a stop signal to the machine, for example a sewing machine, in the event of excessively high and/or excessively low thread tension. Thus, it is also possible to operate a thread brake so as to give the desired tension. Times and pulse widths in the thread tension signal may also be monitored, as well as impulse (force x time) during a predetermined time lapse, etc.

The present invention will now be described in greater detail hereinbelow, with reference to the accompanying Drawings.

Fig. 1 is a side elevation, partly in section, of one embodiment of an apparatus according to the present invention.

Fig. 2 is a front elevation of the embodiment of Fig. 1.

Fig. 3 is a block diagram of an electronic circuit to which an apparatus according to the present invention is coupled.

Fig. 4 shows an electric coupling diagram in respect of the block diagram illustrated in Fig. 3.

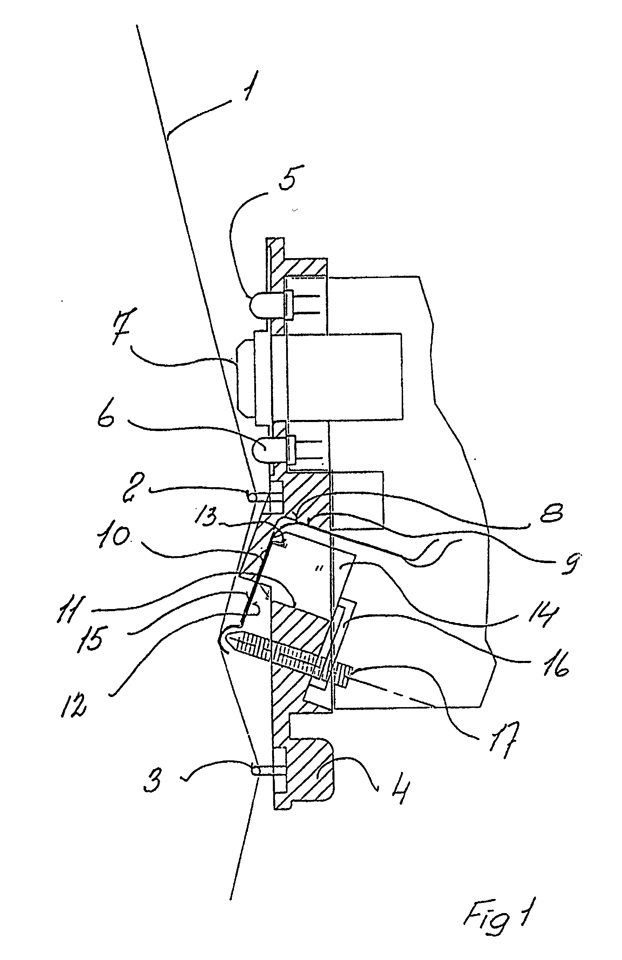

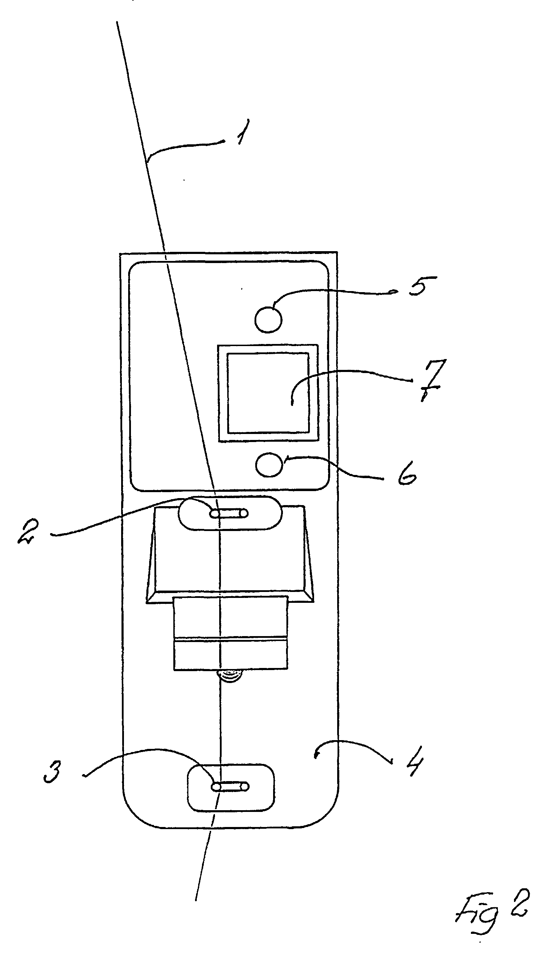

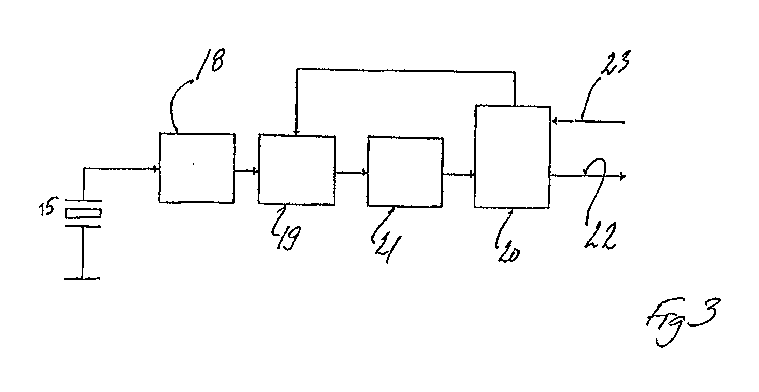

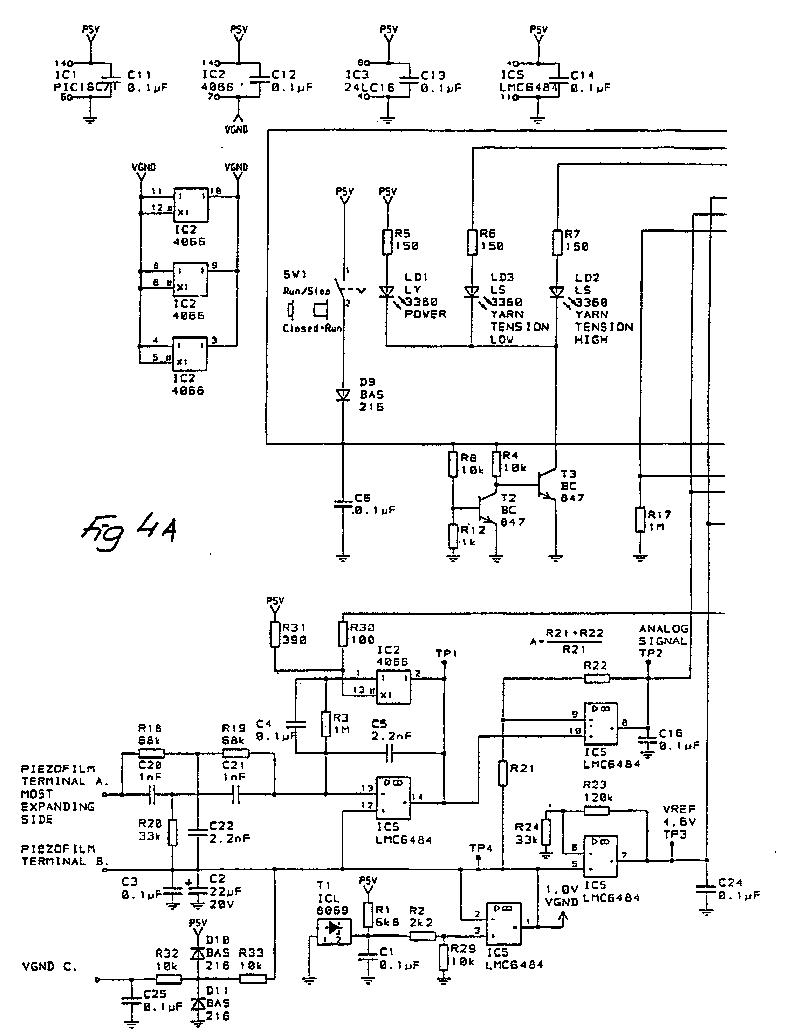

The embodiment of an apparatus according to the present invention illustrated in Figs. 1 and 2 is intended for use in a sewing machine for monitoring the tension in a sewing thread 1 which extends from a thread magazine (not shown) to a sewing needle (not shown) via an upper thread guide loop 2 and a lower thread guide loop 3. The thread guide loops 2 and 3 are anchored in a bracket 4 which, at the top, has an upper LED 5 and at the bottom a lower LED 6 and a button switch 7 placed between the LEDs 5 and 6 for connecting the apparatus to and from the electronic circuit or for activating the apparatus.

Between the thread guide loops 2 and 3, the bracket 4 has a recess 8 with two substantially right-angled walls 9 and 10 and with a wall 11 parallel with the wall 9, while the side walls (not shown) define the recess laterally. The corner portion between the walls 10 and 11 has been removed for forming a through-going aperture for passage of a spring element 12 whose one end is bent substantially at right angles and extends into a recess 13 in a clamping block 14. The spring element 12 carries an active element 15 which is preferably of the piezoelectric type of per se known model. As is apparent from Fig. 1, the active element 15 and the spring element 12 will be pressed against the wall 10 with the aid of the clamping block 14 and two supports 16, one on each side of a screw 17. The supports 16 are urged against the bracket 4 and the clamping block 14 with the aid each of a screw in a threaded hole in the bracket 4. This screw 17 extends through the bracket 4 and serves to counteract excessive downward bending of the spring element 12 whose free end is bent in arcuate shape for forming a contact surface for the thread 1. The spring element is advantageously manufactured from stainless spring steel in order to withstand the wear to which it is exposed by the thread 1. Possibly, the contact surface between the thread and the spring element 12 may display a wear surface coating of ceramic material, or a specific device of such material may be secured on the spring element 12.

The free flexible mass will be obviously extremely slight, which greatly contributes in rendering the apparatus according to the present invention ultra-rapid. It should further be observed that the free edge of the recess 8 and the closely adjacent edge of the clamping block 14 are located in register with one another.

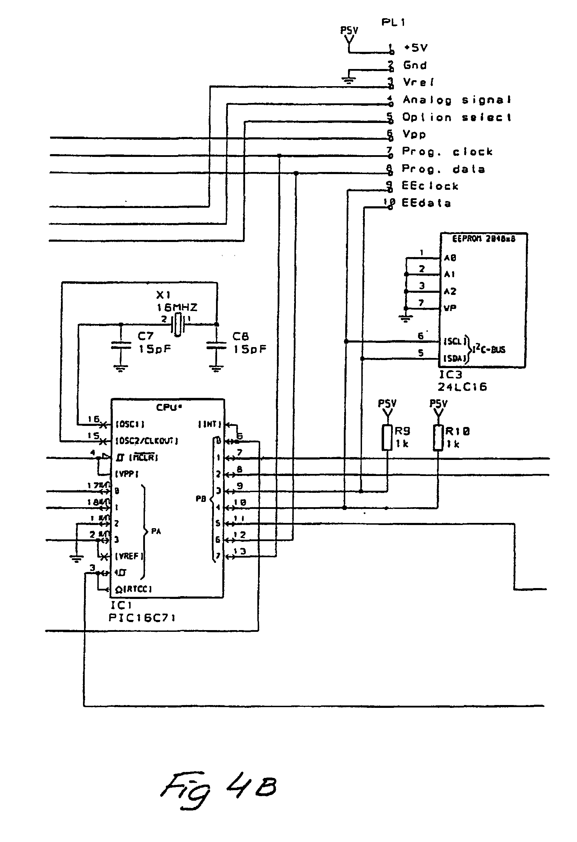

After activation of an apparatus according to the present invention by pressing the switch 7, the upper LED 5 will be lit for high tension in the thread 1, and the lower LED 6 will be lit in the event of low tension in the thread 1. This may be achieved using an electronic circuit according to the block diagram in Fig. 3. The active element 15 is coupled to a so-called notch filter 18 which blocks the active element's 15 own frequency and which is coupled to a switched charging amplifier 19. The amplifier 19 is coupled to a microprocessor 20 via an amplifier 21 and is zeroised by the microprocessor 20 on each machine cycle. The microprocessor 20 is an evaluation and control unit which, on its output 22, emits the desired output signal and, on its input 23, receives a synchronisation signal from the machine in which the apparatus is mounted.

The input signals represent the tension in the thread 1 and the synchronisation signal obtained from the machine and, as a result, the output signal from the microprocessor 20 can be given many different combinations of thread tension measurements and time measurements in known thread tension cycles. Examples of this are the instantaneous value of the thread tension during the entire machine cycle, the peak value of the thread tension during an entire machine cycle, the lowest thread tension during a given part of a machine cycle, the mean value of the thread tension during one or more machine cycles, a stop signal to the machine in the event of excessively high or excessively low thread tension, times and pulse widths in the thread tension signal, impulse (force x time) during given time lapses, etc.

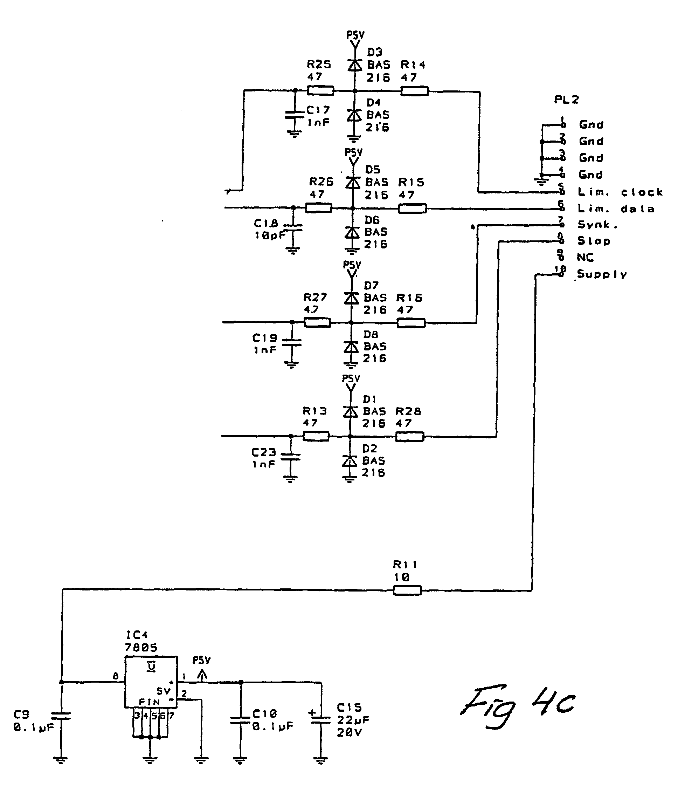

Fig. 4 shows a complete electric coupling diagram in respect of an apparatus according to the present invention. This coupling diagram is so detailed that a person skilled in the art may, using it for guidance, realise the electronic circuit in question. In this context, it should nevertheless be pointed out that the four circuits shown uppermost to the left in Fig. 4 are filters for the supply voltage to the disclosed IC circuits, and the parallel circuits to the left of the button switch 7 (SV1 in Fig. 4) serve for elimination of the gates or inputs to the CPU which are not being employed. The LED LD1 is placed in the button switch 7, and so the button is illuminated when the switch is closed and the apparatus is coupled to the electronic circuit. The LEDs LD2 and LD3 are the same as the LEDs 5 and 6, respectively, in Figs. 1 and 2. As was mentioned earlier, the active element 15 is a piezoelectric element which is per se known in this context and is provided with a connection to the most extended or expanded side of the element, this connection being coupled to the input A, the second connection to the element being coupled to the input B and the screen of the element and/or protective foil is connected to the input C. In the formula above the resistor R22, the amplification in the circuit is calculated before the output TP2 which gives the signal from the active element 15 in analog form. This signal is also found on the output 4 of the plinth PL1 and the input 1 to the CPU, as is apparent in the diagram according to Fig. 4. The circuit lowermost to the right in Fig. 4 converts a so-called raw supply voltage into a suitable supply voltage for the circuit or circuits of approx. 5V ±5-10%

Many modifications are possible without departing from the scope of the inventive concept as defined in the appended Claims.

## Claims

1. An apparatus for generating an electric signal corresponding to the tension and /or movement of a thread (1) which actuates a flexible element (12), with an active element (15) whose tension change is converted into a corresponding electric signal, said active element (15) is coupled to a charging amplifier (19) which is disposed to be zeroised before each measurement cycle,
**characterised in that** the flexible element (12) which is in the form of a tongue is, together with the active element (15), secured in a bracket (4), and **in that** the flexible element (12) and the active element (15) are pressed against a wall (10) in the bracket (4) with the aid of a clamping block (14).

2. The apparatus as claimed in Claim 1, **characterized in that** the bracket (4) has an edge in register with a corresponding edge on the clamping device (14); and that the flexible element (12) and the active element (15) are bendable towards the edges.

3. The apparatus as claimed in Claims 1 and 2, **characterized in that** the end of the free portion of the flexible element (12) is located in register with a support (17) for abutment thereagainst in the event of excessive downward bending of the flexible element (12).

4. The apparatus as claimed in Claim 3, **characterized in that** the support (17) is adjustable.

## Patentansprüche

1. Vorrichtung zum Erzeugen eines elektrischen Signals, das der Spannung und/oder Bewegung eines Fadens (1) entspricht, welcher ein flexibles Element (12) mit einem aktiven Element (15) betätigt, dessen Spannungsveränderung in ein entsprechendes elektrisches Signal umgewandelt wird, wobei das aktive Element (15) mit einem Ladungsverstärker (19) verbunden ist, welcher eingerichtet ist, um vor jedem Messzyklus auf null zurückgesetzt zu werden, **dadurch gekennzeichnet, dass** das flexible Element (12), welches die Gestalt einer Zunge aufweist, zusammen mit dem aktiven Element (15) in einem Träger (4) sicher befestigt ist, und dass das flexible Element (12) und das aktive Element (15) mit Hilfe eines Klemmblocks (14) gegen eine Wand (10) in dem Träger (4) gedrückt werden.

2. Vorrichtung nach Anspruch 1, **dadurch gekennzeichnet, dass** der Träger (4) eine Kante aufweist, die mit einer entsprechenden Kante an der Klemmvorrichtung (14) passgenau ist; und dass das flexible Element (12) und das aktive Element (15) zu den Kanten hin gebogen werden können.

3. Vorrichtung nach Ansprüchen 1 und 2, **dadurch gekennzeichnet, dass** das Ende des freien Abschnitts des flexiblen Elements (12) passgenau mit einer Stütze (17) angeordnet ist, um dagegen in dem Fall anzuliegen, dass sich das flexible Element (12) übermäßig nach unten biegt.

4. Vorrichtung nach Anspruch 3, **dadurch gekennzeichnet, dass** die Stütze (17) einstellbar ist.

## Revendications

1. Appareil de génération d'un signal électrique correspondant à la tension et/ou au mouvement d'un fil (1) qui actionne un élément souple (12), au moyen d'un élément actif (15) dont la variation de tension est convertie en un signal électrique correspondant, ledit élément actif (15) étant couplé à un amplificateur de charge (19) prévu pour être réduit à zéro avant chaque cycle de mesure,
**caractérisé en ce que** l'élément souple (12) prenant la forme d'une languette est fixé, avec l'élément actif (15), dans une console (4), et **en ce que** l'élément souple (12) et l'élément actif (15) sont comprimées contre une paroi (10) dans la console (4) à l'aide d'un bloc de serrage (14).

2. Appareil selon la revendication 1, **caractérisé en ce que** la console (4) présente un bord en alignement avec un bord correspondant sur le dispositif de serrage (14) ; et **en ce que** l'élément souple (12) et l'élément actif (15) sont capables de fléchir en direction des bords.

3. Appareil selon les revendications 1 et 2, **caractérisé en ce que** l'extrémité de la partie libre de l'élément souple (12) est située en alignement avec un support (17) contre lequel elle vient buter en cas de flexion excessive vers le bas de l'élément souple (12).

4. Appareil selon la revendication 3, **caractérisé en ce que** le support (17) est réglable.
